# FASCICULE DE BREVET EUROPEEN

(11) **EP 3 168 902 B1**
(45) Date de publication et mention de la délivrance du brevet: **07.11.2018**
(21) Numéro de dépôt: 16198046.1
(22) Date de dépôt: 09.11.2016
(51) Int. Cl.: H01M 2/20, H01M 10/04, H01M 10/052, H01M 10/0585, H01M 6/40

(54) **PROCÉDÉ DE FABRICATION D'UN DISPOSITIF ÉLECTROCHIMIQUE, TEL QU UN SYSTÈME ÉLECTROCHROME OU UN SYSTÈME DE STOCKAGE D' ÉNERGIE, PAR EXEMPLE UNE MICROBATTERIE, UNE BATTERIE OU UNE SUPERCAPACITÉ**
HERSTELLUNGSVERFAHREN EINER ELEKTROCHEMISCHEN VORRICHTUNG, WIE ETWA EINES ELEKTROCHROMSYSTEMS ODER EINES SYSTEMS ZUR ENERGIESPEICHERUNG, WIE ETWA EINE MIKROBATTERIE, EINE BATTERIE ODER EIN SUPERKONDENSATOR
METHOD FOR MANUFACTURING AN ELECTROCHEMICAL DEVICE, SUCH AS AN ELECTROCHROMIC SYSTEM OR A SYSTEM FOR STORING ENERGY, FOR EXAMPLE A MICROBATTERY, A BATTERY OR A SUPERCAPACITOR

(30) Priorité: 10.11.2015 FR 1560758
(43) Date de publication de la demande: 17.05.2017
(73) Titulaire: Commissariat à l'Energie Atomique et aux Energies Alternatives, 75015 Paris (FR)
(72) Inventeur: OUKASSI, Sami, 38120 Saint-Egrève (FR); GAILLARD, Frédéric, 38500 Voiron (FR); SALOT, Raphaël, 38250 Lans-en-Vercors (FR)
(74) Mandataire: Talbot, Alexandre

(56) Documents cités:
- WO-A1-2013/035519
- WO-A1-2015/103433
- CA-A1- 2 203 869

## Description

### Domaine technique de l'invention

L'invention est relative à un procédé de fabrication de dispositifs électrochimiques, tel que des systèmes électrochromes ou des systèmes pour le stockage de l'énergie, par exemple des microbatteries, des batteries ou des supercapacités, et à un dispositif électrochimique ainsi obtenu.

### État de la technique

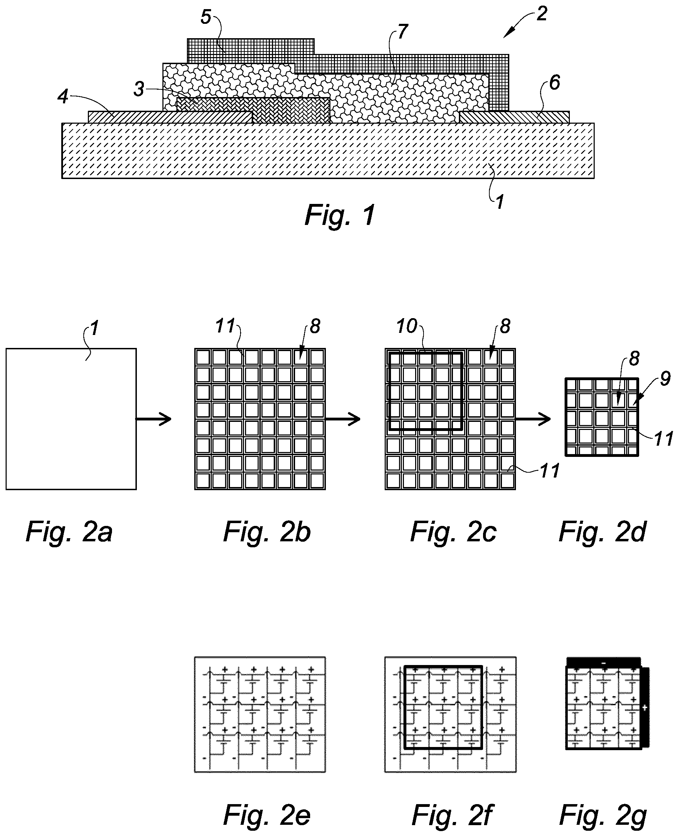

Les systèmes électrochromes et les dispositifs pour le stockage de l'énergie, comme les batteries, microbatteries, ou les supercapacités, sont, classiquement, formés d'un substrat 1 sur lequel est disposé au moins un empilement de couches actives 2, ledit empilement comprenant au moins une première électrode 3 reliée à un premier collecteur de courant 4 et au moins une seconde électrode 5 reliée à un second collecteur de courant 6 (figure 1). Les électrodes sont séparées par une membrane électrolytique 7.
La migration d'un ou plusieurs ions entre les deux électrodes 3, 5 à travers l'électrolyte permet de stocker de l'énergie ou de la délivrer (cas des batteries, microbatteries/supercapacités) ou encore de changer les propriétés du composant, en l'occurrence les propriétés optiques dans le cas des composants électrochromes.

Ces dispositifs sont, particulièrement, robustes et présentent de bonnes performances électriques (stabilité au cours du cyclage, auto-décharge).

Ils peuvent être fabriqués sous différentes formes, avec différentes tailles et avoir différentes connectiques, selon les applications visées.

Pour réaliser de tels dispositifs, le procédé le plus répandu, par exemple décrit dans le document US 6764525, consiste à réaliser des dépôts successifs de couches actives à travers un masque mécanique placé sur le substrat. Les zones évidées du masque correspondent aux zones de dépôt sur le substrat et donnent la forme désirée à la couche déposée.
Cependant, l'utilisation de masques mécaniques présente plusieurs limitations empêchant une production de masse à fort rendement et à faible coût, notamment :
- un coût d'investissement élevé dû à la fabrication, à l'alignement et au nettoyage des masques mécaniques ; ce coût étant proportionnel à la taille du masque et/ou du substrat considéré,
- un coût de fabrication des dispositifs électrochimiques élevé, étant donné la faible densité d'intégration (nombre de produits par substrat) inhérente à l'utilisation des masques mécaniques,
- une faible cadence de production liée essentiellement à des vitesses de dépôt faibles induites par des limitations liées à la présence de masques (par exemple température),
- un faible rendement : l'utilisation de masques mécaniques génère à terme une contamination particulaire au niveau des chambres de dépôt et des substrats, ce qui peut entraîner une défaillance des produits et une chute du rendement.

Afin de remédier à ces inconvénients, d'autres procédés de fabrication ont été mis au point. Ces procédés n'utilisent pas de masques mécaniques et sont basés sur deux aspects essentiels : (i) regrouper les étapes de dépôts afin de structurer plusieurs couches simultanément et (ii) remplacer la méthode de définition de motifs classique (masque mécanique) par une autre, plus simple et plus rapide.

Les documents WO2014099974 et EP2044642 décrivent des procédés de fabrication qui consistent à (i) déposer, dans un premier temps, toutes les couches actives (un premier collecteur de courant, une première électrode, un électrolyte, une deuxième électrode et un deuxième collecteur de courant) de manière à former un seul empilement de couches actives sur la totalité de la surface du substrat (mode « blanket déposition »), et (ii) procéder à la structuration des couches sans utiliser de masques, par exemple par ablation laser, de manière à former plusieurs empilements distincts de couches actives. Dans le document GB2492971, lors de l'étape (ii) les couches sont simultanément structurées et connectées par le biais d'une tête couplant un laser et une buse de dépôt de type jet d'encre.

Dans ces procédés, l'absence de masques ou l'utilisation de masques autres que ceux mécaniques (laser ou photolithographie/gravure) permet de réduire les coûts, d'améliorer la densité d'intégration, et d'avoir un rendement indépendant de la contamination particulaire des masques. La cadence de production n'est plus limitée par des paramètres de dépôt du mode « masque mécanique ». Des vitesses de dépôt plus élevées peuvent être obtenues, mais certaines étapes de dépôt peuvent néanmoins limiter la vitesse du procédé.

Cependant, ces procédés présentent, également, certaines limitations. En particulier, chaque couche active est déposée sur la totalité de la surface du substrat, s'il existe un défaut de continuité dans l'une des couches, celui-ci peut être généralisé à l'ensemble des microbatteries formées après structuration à partir des mêmes uniques couches. Si le défaut est présent dans la couche d'électrolyte, la première et la seconde électrodes peuvent être en contact, entrainant un court-circuit entre la première et deuxième électrodes, une migration non contrôlée d'ions lithium entre les deux électrodes, voire une saturation non réversible de l'une des deux électrodes en ions qui rendrait défaillantes les futures batteries structurées qui partageraient la même zone de défauts.

Le défaut peut s'étendre latéralement (diffusion isotrope et rapide d'ions) pour couvrir une zone plus large du substrat et impacter d'avantages de futures batteries au moment de la structuration

Dans certains autres cas, dus à des contraintes mécaniques accompagnant la diffusion, il est possible d'avoir une délamination plus ou moins étendue des couches, voire il est possible d'arrêter le procédé de fabrication.

Ces différents phénomènes tendent à dégrader de manière considérable le rendement du procédé de fabrication.

De plus, chacune des étapes de structuration (masques, gravure, ablation, etc) est spécifique à un type de produit d'une forme et d'une taille particulières. Dans le cas où plusieurs produits différents doivent être fabriqués, le paramétrage des différentes étapes, induit un ralentissement de la cadence de production.

Le document FR 2977380 décrit un procédé de fabrication d'un dispositif à batteries avec test du fonctionnement des batteries avant leur connexion électrique de manière à ne pas connecter les batteries non fonctionnelles.

Le document US 5,350,645 propose de réaliser une multitude de batteries au lithium identiques sur un substrat. Après réalisation, le substrat est découpé pour dissocier les différentes batteries individuelles. Un enseignement sensiblement équivalent est présenté dans le document WO2015/103433.

Le document US 2008/0263855 propose de former des batteries sur deux faces opposées d'un substrat ou de manière adjacentes sur une même face d'un substrat. Après réalisation, le substrat est découpé pour dissocier les différentes batteries individuelles. En alternative, des groupes de batteries sont formées.

Il existe donc un réel besoin de s'affranchir de ces limitations pour pouvoir industrialiser à grande échelle un procédé de fabrication de tels dispositifs.

### Objet de l'invention

L'invention a pour but de remédier aux inconvénients de l'art antérieur et, en particulier, de proposer un procédé de fabrication de dispositifs électrochimiques, tel que des systèmes électrochromes ou des systèmes pour le stockage de l'énergie, par exemple des microbatteries, des batteries ou des supercapacités permettant de produire en masse à fort rendement et à faible coût des dispositifs électrochimiques de différentes tailles et formes.

Cet objet est atteint par un procédé de fabrication de dispositifs électrochimiques, tel que des systèmes électrochromes ou des systèmes pour le stockage de l'énergie, par exemple des microbatteries, des batteries ou des supercapacités, comprenant les étapes successives suivantes :
a) fournir un substrat,
b) former sur le substrat n entités élémentaires, avec n supérieur ou égal à 2, chaque entité élémentaire comprenant :
   - un premier collecteur de courant, d'une première polarité,
   - une première électrode,
   - une couche mince ioniquement conductrice et électriquement isolante,
   - une seconde électrode,
   - un second collecteur de courant, d'une seconde polarité,
c) découper le substrat, le découpage étant réalisé de manière à avoir au moins x entités élémentaires entières, sur le substrat, avec x supérieur ou égal à 2 et x inférieur ou égal à n,
d) connecter électriquement en parallèle les collecteurs de courant de même polarité des x entités élémentaires entières.

Cet objet est également atteint par un dispositif électrochimique, tel qu'un système électrochrome ou un système pour le stockage de l'énergie, par exemple une microbatterie, une batterie ou une supercapacité, comprenant :
- un substrat,
- au moins x entités élémentaires entières, disposées sur le substrat, avec x supérieur ou égal à 2, chaque entité élémentaire comprenant :
   - un premier collecteur de courant, d'une première polarité,
   - une première électrode,
   - une couche mince ioniquement conductrice et électriquement isolante,
   - une seconde électrode,
   - un second collecteur de courant, d'une seconde polarité,
les collecteurs de courant de même polarité des entités élémentaires entières étant connectées électriquement en parallèle.

### Description sommaire des dessins

D'autres avantages et caractéristiques ressortiront plus clairement de la description qui va suivre de modes particuliers de réalisation de l'invention donnés à titre d'exemples, non limitatifs, et représentés aux dessins annexés, dans lesquels :
- la figure 1 représente, de manière schématique, en coupe, un dispositif électrochimique, tel qu'un système électrochrome ou un système pour le stockage de l'énergie, par exemple une microbatterie, une batterie ou une supercapacité,
- les figures 2a à 2d représentent, de manière schématique et en vue de dessus, un substrat comportant plusieurs entités élémentaires selon différentes étapes d'un procédé de réalisation d'un dispositif électrochimique selon l'invention,
- les figures 2e à 2g représentent, de manière schématique, la représentation électrique des substrats représentés aux figures 2b à 2d,
- les figures 3a à 3c représentent, de manière schématique et en vue de dessus, des entités élémentaires de différentes formes selon différents modes de réalisation de l'invention,
- les figures 4a à 4c représentent, de manière schématique et en coupe, un substrat comportant une ou plusieurs entités élémentaires lors de différentes étapes du procédé de réalisation,
- la figure 4d représente, de manière schématique et en trois dimensions, un substrat comportant plusieurs entités élémentaires et les connexions des collecteurs de courant de même polarité, selon un mode de réalisation,
- les figures 5a à 5c représentent, de manière schématique et en coupe, un substrat comportant une ou plusieurs entités élémentaires lors de différentes étapes du procédé de réalisation,
- la figure 5d représente, de manière schématique et en trois dimensions, un substrat comportant plusieurs entités élémentaires et les connexions des collecteurs de courant de même polarité, selon un mode de réalisation.

### Description d'un mode de réalisation préférentiel de l'invention

Le procédé de réalisation d'un dispositif électrochimique, tel qu'un système électrochrome ou un système pour le stockage de l'énergie, par exemple une microbatterie, une batterie ou une supercapacité, comprend les étapes successives suivantes (figure 2a à 2g) :
a) fournir un substrat 1 muni d'une première et d'une seconde faces,
b) former sur le substrat 1 n entités élémentaires 8, avec n supérieur ou égal à 2, chaque entité élémentaire 8 comprenant :
   - un premier collecteur de courant 4, d'une première polarité,
   - une première électrode 3,
   - une couche mince ioniquement conductrice et électriquement isolante 7,
   - une seconde électrode 5,
   - un second collecteur de courant 6, d'une seconde polarité,
c) découper le substrat 1, le découpage étant réalisé de manière à avoir au moins x entités élémentaires entières 8, sur le substrat, avec x un entier supérieur ou égal à 2 et x inférieur ou égal à n,
d) connecter électriquement en parallèle les collecteurs de courant de même polarité des x entités élémentaires entières 8.

Contrairement à l'art antérieur, le dispositif final n'est donc pas formé d'une seule entité structurée à la taille désirée mais de plusieurs entités élémentaires 8 connectées en parallèle. Chaque entité élémentaire entière 8 présente une propriété fonctionnelle Xi. Les entités élémentaires 8 sont connectées en parallèle, de manière à conférer au dispositif électrochimique une propriété fonctionnelle Xf.
Les propriétés fonctionnelles Xi, Xf sont des propriétés électriques, optiques ou électrochimiques.
Les propriétés du dispositif final correspondent à l'association des propriétés des entités élémentaires 8 connectées.
Avec un tel procédé, il est possible de réaliser à partir d'un même substrat 1 recouvert d'entités élémentaires avantageusement identiques 8, différentes tailles de dispositifs électrochimiques finaux, il suffit simplement de modifier la taille de la découpe pour avoir la forme désirée du produit désiré.

Avantageusement, le substrat fourni à l'étape a) est en silicium, verre, céramique ou métal (figure 2a). Le substrat, appelé aussi substrat de support, est un monobloc, il forme un élément continu.
Le substrat est, avantageusement, nettoyé, par exemple par voie chimique, afin d'éliminer les résidus et/ou particules, éventuellement présents à sa surface. Une étape de traitement thermique peut aussi être appliquée pour diminuer les contraintes résiduelles et/ou en complément de l'étape de nettoyage.

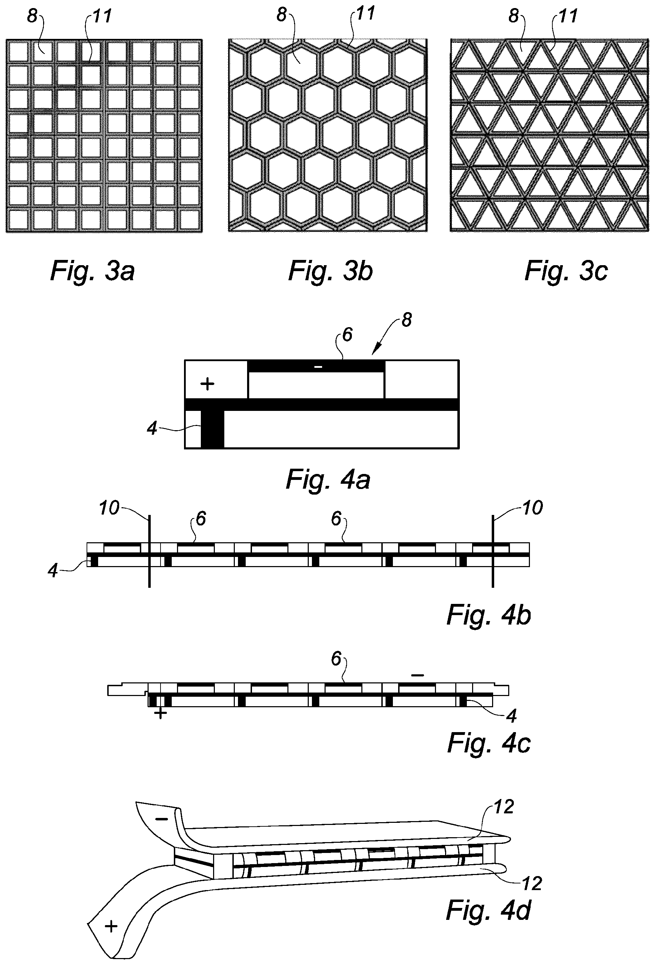

Lors de l'étape b), un premier groupe d'entités élémentaires 8 est formé sur le substrat 1 (figures 2b et 2e). Les entités élémentaires 8 peuvent aussi être appelées cellules élémentaires.
Les entités élémentaires 8 peuvent avoir plusieurs formes possibles. Elles ont avantageusement la forme d'un polygone tel qu'un rectangle ou un losange. Encore plus avantageusement, elles ont la forme d'un polygone régulier, tel qu'un carré, un triangle équilatéral ou un hexagone (figure 3a à 3c).
Les entités élémentaires 8 présentent des dimensions inférieures à celles du produit final à fabriquer, ou à celles des produits finaux s'il y en a plusieurs sur la même ligne de production et notamment sur le ou les substrats.
Les entités élémentaires 8 sont, avantageusement, identiques.
Elles pourraient également, selon un autre mode de réalisation, être différentes.

De manière avantageuse, les entités élémentaires 8 du premier groupe ou une partie des entités élémentaires 8 du premier groupe sont alignées selon une première direction et de manière avantageuse selon un premier pas de répétition. Le premier groupe peut comporter des entités élémentaires différentes qui forment un motif se répétant périodiquement selon la première direction. Dans l'exemple illustré à la figure 2b, les entités élémentaires sont alignées selon deux directions et avantageusement selon deux directions perpendiculaires. Les entités élémentaires se répètent selon deux pas de répétition qui peuvent être identiques ou différents.

La formation des entités élémentaires 8 consiste en une succession d'étapes de dépôt et de structuration des différentes couches formant l'empilement électrochimique des entités élémentaires 8.
Les dépôts des matériaux formant les différentes couches de l'empilement peuvent être réalisés par des techniques de dépôt sous vide, par exemple par dépôt physique en phase vapeur (ou PVD pour « physical vapor deposition »), dépôt chimique en phase vapeur (CVD pour « chemical vapor deposition »), dépôt chimique en phase vapeur assisté par plasma (ou PECVD pour« plasma enhanced CVD »), dépôt chimique en phase vapeur par composés organométalliques (ou MOCVD pour « metal organic CVD »), etc.
La structuration permet de définir un certain nombre d'entités élémentaires 8.
Les entités élémentaires sont, avantageusement, caractérisées par le fait d'avoir les mêmes propriétés géométriques (dimensions, forme, et épaisseur des couches). Ces entités élémentaires 8 présentent les mêmes propriétés fonctionnelles (électriques, optiques, électrochimiques) que le composant à produire, ramenées au rapport des géométries des deux objets.
Dans le cas ou les entités élémentaires sont identiques, la performance du produit obtenu est égale à la somme des contributions des entités élémentaires, et la performance du produit final correspond à la moyenne des performances uniformes des entités élémentaires. La performance du produit ne dépend pas d'une certaine catégorie d'entités.
La gestion du procédé de fabrication est plus simple : la variation de la taille du produit final n'a pas d'impact sur le pavage utilisé.
Dans le cas où plusieurs tailles ou géométries sont utilisées, on a tendance à privilégier une certaine configuration de pavage par produit, néanmoins il est possible que le pavage soit dépendant du produit et ne peut être généralisé à tous les produits.

La structuration peut être réalisée par des techniques issues du domaine de la microélectronique, par exemple par une étape de photolithographie suivie d'une étape de gravure qui peut être réalisée par voie humide ou par plasma. La structuration peut être aussi réalisée par ablation laser.

Les matériaux formant l'empilement seront choisis par l'homme du métier en fonction des propriétés désirées.
Dans le cas des microbatteries par exemple, les étapes de dépôt/structuration d'au moins un premier collecteur de courant, une première électrode, un électrolyte, une deuxième électrode, et un deuxième collecteur de courant sont nécessaires pour finaliser cette phase.

Un exemple d'empilement de microbatteries peut être par exemple Pt (0.1*µ*m)/LiCoO₂ (10*µ*m)/LiPON (2*µ*m)/Si (0.1*µ*m)/Cu (100nm) respectivement pour les éléments suivants : le premier collecteur de courant, la première électrode, l'électrolyte, la seconde électrode, le second collecteur de courant.

Les entités élémentaires 8 sont, avantageusement, régulièrement espacées les unes des autres. Les espaces entre les entités élémentaires 8 forment des chemins de découpe 11, aussi appelés zones de séparation.
Lorsque les entités élémentaires 8 sont carrées, elles forment une matrice d'entités élémentaires 8.
La surface de l'espace 11 entre les entités élémentaires 8 représente moins de 20% de la surface des entités élémentaires, de préférence moins de 10% de la surface des entités élémentaires, et encore plus préférentiellement, moins de 5% de la surface des entités élémentaires. La surface des chemins de découpe 11 est ainsi suffisante pour réaliser la découpe et la perte de surface est limitée. Le dispositif reste, avantageusement, compact. De manière avantageuse, la distance séparant deux entités élémentaires 8 adjacentes est inférieure à la largeur du dispositif de découpe ou découpeur, par exemple une scie ou un faisceau laser, utilisé pour découper le substrat. Ainsi, lors de l'étape de découpe, le dispositif de découpe forme au moins une entité élémentaire 9 non entière. De manière préférentielle, la largeur d'une entité élémentaire 8 entière est supérieure à la largeur du dispositif de découpe, c'est-à-dire supérieure à la largeur de la zone de découpe de manière à découper une seule entité élémentaire 8 perpendiculairement à l'axe de découpe.

Lors de l'étape c), le substrat 1 est découpé afin de donner la taille et la forme considérée au produit final. La découpe est réalisée selon une ligne de découpe 10 (figures 2c et 2f).
Le substrat 1 est, préférentiellement, découpé sous la forme d'un carré, d'un rectangle, d'un triangle équilatéral ou d'un hexagone.

Les entités élémentaires entières et fonctionnelles 8, présentes sur le substrat découpé, sont adjacentes. Elles forment un bloc au moins au centre du substrat découpé. Selon la découpe, le bloc peut s'étendre jusqu'à la périphérie du substrat découpé.

Dans les procédés décrits dans l'état de l'art, la phase de découpe est réalisée sur des substrats où la forme du produit final a été obtenue préalablement par une étape de structuration. L'étape de structuration a été réalisée au moyen d'un ou plusieurs masques spécifiques au produit final ce qui est compliqué et couteux.
Dans le procédé de l'invention, c'est l'étape de découpe qui donne la forme finale du produit. Il suffit de choisir le nombre d'entités élémentaires 8 en fonction de la taille et des propriétés du dispositif final.
Cette étape de découpe peut être réalisée par exemple par ablation laser, ou par gravure chimique. En d'autres termes, pour former des dispositifs électrochimiques différents, il est possible d'utiliser plusieurs substrats présentant le même pavage d'entités élémentaires. En découpant de manière différente les substrats, il est possible de former des dispositifs électrochimiques différents à partir du même substrat.

Lors de l'étape de découpe, le substrat est découpé de manière à diviser le premier groupe d'entités élémentaires en au moins des deuxième et troisième groupes d'entités élémentaires différents, c'est-à-dire que les deuxième et troisième groupes d'entités élémentaires ne partagent aucune entité élémentaire entière. Les deuxième et troisième groupes d'entités élémentaires comportent chacun une pluralité d'entités élémentaires qui proviennent du premier groupe d'entités élémentaires. De manière avantageuse, le premier groupe d'entités élémentaires ne possède que des entités élémentaires entières.

Selon les modes de réalisation, les deuxième et troisième groupes d'entités élémentaires comportent le même nombre d'entités élémentaires entières et éventuellement le même nombre d'entités élémentaires non entières. De manière avantageuse, les deuxième et troisième groupes d'entités élémentaires présentent la même aire et ont avantageusement la même forme. En alternative, les deuxième et troisième groupes d'entités élémentaires présentent la même aire mais ont des formes différentes. Il est encore possible de prévoir que les deuxième et troisième groupes d'entités élémentaires présentent des aires différentes.

Deux modes de réalisation peuvent être considérés.
Dans un premier mode de réalisation hors de l'invention, la découpe est réalisée uniquement dans les chemins de découpe 11. Les entités élémentaires ne sont donc pas découpées : la ligne de découpe 10 suit les chemins de découpe 11.
Ce mode de réalisation est obtenu lorsque la forme des entités élémentaires et le pas de structuration élémentaire permettent un « pavage » de l'ensemble des formes des produits considérés. Par pavage, on entend un recouvrement d'un espace affine donné, à l'aide de figures ou de motifs identiques, ayant en commun deux à deux uniquement des parties de leurs frontières.
Par exemple, si on prend le cas de deux produits finaux de forme carrée avec un premier qui a les dimensions de 1cmx1cm et un deuxième de dimensions 2.2cmx2.2cm et si la taille des entités élémentaires est de 0.2cmx0.2cm alors il est possible de réaliser une découpe uniquement dans l'espace 11 entre les entités élémentaires 8.
Avantageusement, dans ce mode de réalisation, les pertes liées à la découpe sont réduites car aucune entité élémentaire 8 n'est découpée. Cependant, cela impose d'avoir des espaces entre les entités élémentaires relativement important afin de faire passer un dispositif de découpe sans abimer les entités élémentaires.

Dans le second mode de réalisation conforme à l'invention, la ligne de découpe 10 passe à la fois dans des chemins de découpe 11 et à travers des entités élémentaires 8, qui sont donc découpées.
La découpe conduit à un substrat 1 découpé comportant à la fois des entités élémentaires entières 8 et des entités élémentaires non entières 9. Les entités élémentaires entières 8 sont dites fonctionnelles et les entités non entières 9 sont, par opposition, non fonctionnelles. De manière avantageuse, les au moins deuxième et troisième groupes d'entités élémentaires comportent des entités élémentaires entières et non entières. Les entités élémentaires non entières proviennent de l'étape de découpe et sont disposées à la périphérie du deuxième groupe et à la périphérie du troisième groupe d'entités élémentaires. Le deuxième groupe d'entités élémentaires est un élément monobloc comportant une pluralité d'entités élémentaires et au moins une entité élémentaire provenant du découpage du substrat. Il en est avantageusement de même pour le troisième groupe d'entités élémentaires.

De manière avantageuse, les entités élémentaires non entières sont exclusivement formées à la périphérie des deuxième et troisième groupes d'entités élémentaires de sorte qu'une entité élémentaire non entière n'est jamais complètement entourée par des entités élémentaires entières ou non entières.

Dans un mode de réalisation particulier, la périphérie du deuxième groupe d'entités élémentaires est formée exclusivement d'entités élémentaires non entières. En alternative, la périphérie du deuxième groupe d'entités élémentaires est formée par des entités élémentaires non entières et des d'entités élémentaires entières.

Il peut en être de même pour le troisième groupe d'entités élémentaires. Dans un mode de réalisation avantageux, le deuxième groupe et le troisième groupe d'entités élémentaires partagent un côté commun formé par un groupe d'entités élémentaires non entières car elles sont découpées pour définir le deuxième groupe et le troisième groupe à partir du premier groupe.

Ce mode de réalisation avec découpage d'entités élémentaires entières et fonctionnelles pour former des deuxième et troisième groupes permet par exemple de réduire la distance de séparation entre toutes les entités élémentaires car le pavage comporte moins de lignes de découpe prédéfinie que dans l'art antérieur ou ne comporte plus de lignes de découpe prédéfinie, c'est-à-dire des zones larges dépourvues d'entités élémentaires. En supprimant, les lignes de découpe, la densité d'intégration des entités élémentaires est augmentée et il est possible de former plus d'entités élémentaires sur un même substrat. Les inventeurs ont observé qu'il est possible de former plus de dispositifs électrochimiques sur un même substrat. En l'absence de ligne de découpe, le découpage du substrat est réalisé en découpant exclusivement des entités élémentaires entières pour former des entités élémentaires non entières.

Avantageusement, les entités élémentaires non entières 9 ne seront pas connectées électriquement lors de l'étape d).

Cette configuration peut avoir lieu dans le cas où les dimensions et/ou la forme des entités élémentaires 8 ne permet pas un pavage de l'ensemble des formes des produits finaux considérés.
Par exemple, si on prend le cas de deux produits de forme carrée avec un premier produit qui a les dimensions de 1cmx1cm et un deuxième produit qui a les dimensions 2.2cmx2.2cm et si la taille des entités élémentaires est de 0.3cmx0.3cm alors il n'est pas possible de réaliser une découpe uniquement dans la zone de séparation 11.
La forme des entités élémentaires 8 a également une influence sur la découpe. Par exemple, avec des entités élémentaires 8 de forme triangulaire, on obtiendra également un découpage des cellules élémentaires 8 pour un dispositif final de forme carrée.

Dans ce mode de réalisation, après l'étape c), et avant l'étape d), une étape de nettoyage est, avantageusement, réalisée pour enlever au moins une partie des empilements de couches actives des entités élémentaires découpées 9. Préférentiellement, les entités élémentaires non entières sont éliminées. Préférentiellement, pour éliminer les empilements non fonctionnels, les entités élémentaires non entières 9 et non fonctionnelles sont gravées avant l'étape de connexion d). La gravure est une gravure sélective permettant de graver uniquement les entités élémentaires non entières tout en laissant intactes les entités élémentaires entières et fonctionnelles.
La gravure est, avantageusement, réalisée par voie humide en trempant tout le substrat dans une solution chimique qui attaque uniquement les matériaux rendus accessibles par la découpe.
Dans ce mode de réalisation, la perte économique sera uniquement liée au nombre d'entités élémentaires traversées par la découpe, les autres entités élémentaires demeurant intactes et fonctionnelles.
Le produit final présentera ainsi un « pavage » de l'ensemble de sa forme par des entités élémentaires 8, avec un périmètre formé de « motifs entiers ou de parties de motifs manquants». Même si ce périmètre constitue une perte de surface active, de tels dispositifs présentent l'avantage de pouvoir réaliser des produits de différentes formes/dimensions en minimisant le nombre d'étapes technologiques spécifiques à chacun des produits finaux considérés. Seule l'étape de découpe est spécifique.

Il est alors possible de réaliser avec deux substrats identiques, c'est-à-dire comportant le même pavage d'entités élémentaires, des deuxième et troisièmes groupes d'entités élémentaires différents dans leurs nombres et/ou dans leurs formes. Le procédé de fabrication des substrats peut être optimisé pour la fabrication des entités élémentaires 8 et l'étape de découpe du substrat permet de le spécialiser afin de fabriquer les dispositifs électrochimiques recherchés. Cette approche est différente de celle de l'art antérieur où le substrat est spécialisé dès l'étape de pavage ce qui engendre des coûts de fabrications plus importants et des difficultés pour optimiser la surface occupée du substrat. Ce problème d'optimisation est d'autant plus critique que des dispositifs électrochimiques différents dans leurs formes doivent être réalisés sur un même substrat.

La phase de structuration est générique à tous les produits considérés. La structuration n'est pas assujettie à des règles de dessins spécifiques en lien avec des produits donnés : elle ne prend en compte aucune donnée géométrique spécifique à un produit.
Il est également possible d'utiliser différentes dispositions des entités élémentaires ainsi que différentes tailles de zones de séparation, c'est-à-dire un pavage différent, pour un même produit. La taille et le positionnement des entités élémentaires dépendent du produit final et nécessitent, généralement, une connaissance des dimensions du produit final au préalable.

Il est possible que, si l'une des couches de l'empilement présente un défaut, une faible proportion d'entités élémentaires 8 soit défectueuse. Avantageusement, comme les entités élémentaires 8 sont connectées en parallèle, le nombre de dispositifs impactés par ledit défaut sera limité.
Dans le cas d'un dispositif électrochimique formé pleine plaque par un seul élément, le défaut se propage à tout le dispositif qui ne sera donc pas fonctionnel. Dans le cas d'un dispositif électrochimique formé d'une pluralité d'entités élémentaires, le défaut restera confiné, par exemple, dans une seule entité élémentaire, le dispositif électrochimique sera tout de même fonctionnel.

Lors de l'étape d (figures 2d et 2g), les différentes entités élémentaires entières 8 et fonctionnelles, d'un même produit découpé, sont connectées en parallèle les unes avec les autres pour obtenir les caractéristiques fonctionnelles, et notamment les propriétés électrochimiques, souhaitées pour le produit final.
La connexion en parallèle revient à récupérer, à assembler les caractéristiques équivalentes de toutes les entités élémentaires 8 pour obtenir les mêmes caractéristiques qu'un produit de même forme/taille, réalisé par des procédés de l'art antérieur, c'est-à-dire avec un seul bloc non divisé.
Avantageusement, les entités élémentaires non entières 9 ne sont pas connectées électriquement aux entités élémentaires entières 8.

La connexion en parallèle des entités élémentaires 8 du deuxième groupe d'entités élémentaires permet de former un premier dispositif électrochimique. La connexion en parallèle des entités élémentaires 8 du troisième groupe d'entités élémentaires permet de former un deuxième dispositif électrochimique. Selon les modes de réalisation le premier dispositif électrochimique est formé avant le deuxième dispositif électrochimique. En alternative, les premier et deuxième dispositifs électrochimiques sont formés simultanément.

La mise en parallèle consiste à relier électriquement les collecteurs de courant de même polarité entre eux.
La position des connectiques dépendra de la position et de la structuration des collecteurs de courant.
Selon un premier mode de réalisation (figures 4a à 4d), le premier collecteur de courant 4 est formé sur la première face du substrat 1. L'empilement formé de la première électrode 3, la couche mince ioniquement conductrice 7 et électriquement isolante, la seconde électrode 5, le second collecteur de courant 6, d'une seconde polarité, est formé sur la seconde face du substrat 1. Il y a une polarité par face de substrat. Dans cette configuration, le substrat est électriquement isolant. Les dépôts de ces différents éléments, et notamment, la première électrode 3, la couche mince ioniquement conductrice 7 et électriquement isolante, la seconde électrode 5, sont, avantageusement, conformes.

Dans ce mode de réalisation, après découpe selon la ligne de découpe 10 (figure 4b) et gravure (figure 4c), les collecteurs de courant 4, 6 disposés sur une même face du substrat 1 sont électriquement connectés par une couche électriquement conductrice 12 (figure 4d). La mise en parallèle revient à mettre en contact, pour chacune des deux faces du substrat, tous les collecteurs de courant qui y sont présents.

La couche électriquement conductrice 12 est, par exemple, réalisée par une technique de dépôt, de type pulvérisation, jet d'encre ou évaporation. La couche déposée est, par exemple, métallique et, avantageusement, en Ti, Cu, Ni, ou Al. Selon un autre mode de réalisation, la couche électriquement conductrice 12 est réalisée par report d'un film électriquement conducteur sur les collecteurs de courant de même polarité.
Par film électriquement conducteur, on entend que le film comporte au moins une face conductrice, cette face étant destinée à être en contact avec les collecteurs de courant de même polarité.
Le film électriquement conducteur est, avantageusement, reporté par laminage ou encore par une technique de type « pick and place », pouvant parfois être appelée technique de report de puces.
Le film électriquement conducteur est un film métallique, par exemple, en Cu, Ni, Ti, ou Al, ou un film électriquement isolant recouvert d'une couche électriquement conductrice.
Dans ce dernier cas, le film électriquement isolant est fin pour pouvoir lui conférer une certaine souplesse pour permettre le report du film sur le substrat. Le film est, par exemple, en polymère, en verre, ou en céramique. La couche conductrice est, de préférence un polymère ou une colle ou un film tel qu'un film conducteur anisotropique (ou ACF pour « anisotropic conductive film »).
Le film peut également être un scotch électriquement conducteur.

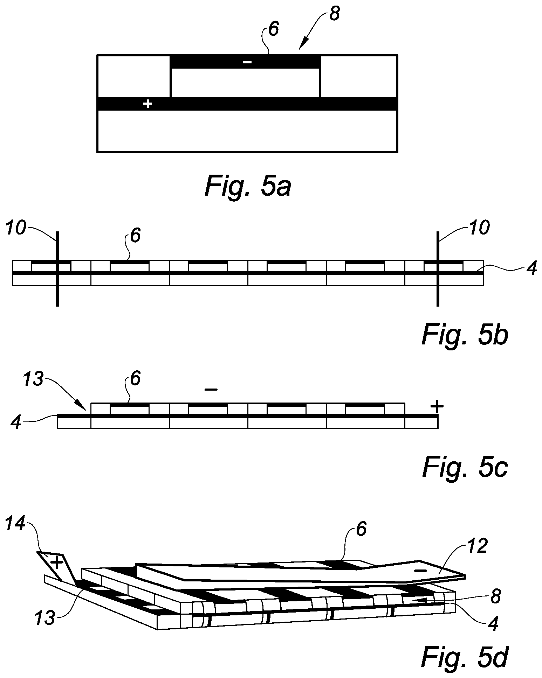

Selon un autre mode de réalisation (figures 5a à 5d), le premier collecteur de courant 4, la première électrode 3, la couche mince ioniquement conductrice et électriquement isolante 7, la seconde électrode 5, le second collecteur de courant 6, d'une seconde polarité, sont formés sur une même face du substrat. Il peut s'agir de la première face ou de la seconde face du substrat.
Dans ce mode de réalisation, les premiers et seconds collecteurs de courant 4, 6 des entités élémentaires 8 sont regroupés sur une seule et même face du substrat.
Le premier collecteur de courant 4 est, avantageusement, formé par dépôt d'un film électriquement conducteur et continu sur le substrat 1. Le premier collecteur de courant est commun à toutes les entités élémentaires 8. Avantageusement, il n'a pas besoin d'être structuré. Seuls, les seconds collecteurs de courant 6 sont structurés (figure 5d).
Après découpe selon la ligne de découpe 10 (figure 5b) et gravure (figure 5c), les collecteurs de courant de même polarité sont connectés.
Les seconds collecteurs de courant 6 sont connectés entre eux par une couche électriquement conductrice 12 (figure 5d). La couche électriquement conductrice 12 peut être réalisée comme précédemment décrit.
Pour connecter les premiers collecteurs de courant entre eux. Plusieurs modes de réalisation sont possibles.
Lors de l'étape de découpe, le premier collecteur de courant 4 continu et commun à toutes les entités élémentaires est mis à jour. Le contact peut se prendre sur la périphérie du substrat découpé, au niveau de la découpe, si la surface du contact est suffisante.
Selon une autre alternative, l'étape de découpe comporte le passage de deux faisceaux laser. Le premier faisceau est configuré pour s'arrêter sur la face externe du premier collecteur de courant 4 pour dégager une zone de contact 13. Par face externe, on entend la face du premier collecteur de courant 4 qui est à l'opposé du substrat 1.
Ainsi, le procédé comporte une étape durant laquelle le premier collecteur de courant 4 en périphérie de la zone de découpage est rendu accessible. Cette accessibilité est obtenue, avantageusement, par structuration de la ou des couches disposées au-dessus du collecteur de courant, qui peut être réalisée, par exemple, par ablation laser ou par gravure.

Le second faisceau laser traverse entièrement le substrat 1 pour assurer la découpe.
L'ordre de passage des deux faisceaux laser peut être inversé.
La prise de contact sur le premier collecteur de courant 4 commun aux entités élémentaires 8 se fait, par exemple grâce à un plot électriquement conducteur 14, positionné dans la zone de contact 13 dégagée (figure 5d).

Dans les procédés de l'art antérieur, la présence d'un seul défaut entraîne la dégradation de l'ensemble des dispositifs construits sur le dit substrat. De plus, seules les étapes de dépôt peuvent être communes à plusieurs produits (de taille et/ou forme différente), ce qui implique un coût de production élevé s'il y a une multiplication des produits.

Le procédé de réalisation d'un tel dispositif électrochimique, selon l'invention, met en oeuvre des phases successives de :
- dépôt/structuration de plusieurs entités élémentaires 8 sur un même substrat 1, de sorte à former un substrat 1 composé de plusieurs entités élémentaires 8 de même taille et de même forme
- découpe du substrat 1 selon la forme et les dimensions du ou des produits considérés,
- mise en parallèle des entités élémentaires 8 constituant le produit final.

Dans ce procédé, le risque de dégradation à l'échelle du substrat est écarté. De plus, les étapes à la fois de dépôt et de structuration sont communes à un ensemble de produits différents, ce qui permet de réduire les coûts de fabrication. En effet, il est possible de réaliser à partir d'un même substrat recouvert d'entités élémentaires de même dimension, différentes tailles de dispositifs finaux, il suffit simplement de modifier la taille de la découpe pour avoir la forme désirée du produit désiré.

Le dispositif électrochimique, tel qu'un système électrochrome ou un système pour le stockage de l'énergie, par exemple une microbatterie, une batterie ou une supercapacité, obtenu par ce procédé comprend :
- un substrat 1 muni d'une première et d'une seconde faces,
- au moins x entités élémentaires entières 8, disposées sur le substrat 1, avec x un entier supérieur ou égal à 2, chaque entité élémentaire 8 comprenant :
   - un premier collecteur de courant 4, d'une première polarité,
   - une première électrode 3,
   - une couche mince ioniquement conductrice et électriquement isolante 7,
   - une seconde électrode 5,
   - un second collecteur de courant 6, d'une seconde polarité.
Les collecteurs de courant 4, 6 de même polarité des entités élémentaires entières 8 sont connectés électriquement en parallèle, c'est-à-dire que tous les premiers collecteurs de courant 4 des entités élémentaires 8 sont électriquement connectés en parallèle et que tous les seconds collecteurs de courant 6 des entités élémentaires 8 sont électriquement connectés en parallèle.

Une microbatterie est, par exemple, formée d'une pluralité d'entités élémentaires 8 entières connectées en parallèle.

Les entités élémentaires 8 sont, avantageusement, identiques.

Les entités élémentaires 8 ont, avantageusement, la forme d'un carré, d'un rectangle, d'un losange, d'un triangle équilatéral ou d'un hexagone.

La surface de l'espace entre les entités élémentaires 8 représente, avantageusement, moins de 20% de la surface des entités élémentaires, de préférence moins de 10% de la surface des entités élémentaires, et encore plus préférentiellement, moins de 5% de la surface des entités élémentaires.

Dans les microbatteries, l'électrode positive 3 est formée d'une couche en matériau d'insertion du lithium, tel que TiOS, TiS₂, LiTiOS, LiTiS₂, LiCoO₂, V₂O₅....
L'anode 5 est formée d'un matériau constitué exclusivement de lithium métallique (batterie Li-métal) ou d'un matériau d'insertion (NiO₂, SnO, Si, Ge, C...) lithié (batterie lithium-ion).
La couche d'électrolyte 8 est, de préférence, constituée d'oxynitrure de lithium et de phosphore (LiPON). Elle pourrait également être en LiPONB, LiSiCON.

Dans le cas d'un système électrochrome, l'électrode active électrochromique est formée d'un matériau électrochrome en mesure d'insérer, réversiblement et simultanément, des ions et des électrons pour donner une coloration persistante de l'état d'oxydation correspondant.
L'électrode active 5 et/ou la contre-électrode 4 est une électrode en oxyde de tungstène, en oxyde d'iridium, en oxyde de vanadium ou en oxyde de molybdène.
L'électrode active 5 est, préférentiellement, en oxyde de tungstène, ou en oxyde de molybdène.
La contre-électrode 3 est, préférentiellement, en oxyde d'iridium, en oxyde de vanadium.
La couche solide d'électrolyte conducteur ionique 8 est à base de lithium, par exemple, en nitrure de lithium (Li₃N), LiPON, LiSiPON, ou encore en LiBON etc...

Les électrodes 3, 5 de la microcapacité peuvent être à base de carbone ou d'oxydes de métaux comme RuO₂, IrO₂, TaO₂ ou MnO₂. L'électrolyte est, par exemple, un matériau vitreux du même type que celui des microbatteries.

Afin de protéger les matériaux actifs des électrodes de l'oxygène et de l'humidité, présents dans l'air, ces dispositifs sont, avantageusement, recouverts par un système d'encapsulation, non représenté, obtenu par empilement de couches protectrices ou par report d'un capot.
La couche d'encapsulation est, par exemple, en céramique, en polymère, ou en métal. Il peut également s'agir d'une superposition de couches de ces différents matériaux.
Dans le cas d'un système électrochrome, la couche d'encapsulation est transparente à la lumière.

Plusieurs dispositifs électrochimiques, chacun formés d'une pluralité d'entités élémentaires 8 entières, connectées en parallèle, peuvent ensuite être électriquement connectés ensemble. Il peut s'agir, par exemple, de l'association d'une microbatterie et d'une super-capacité.

L'étape de découpe permet de former plusieurs dispositifs électrochimiques identiques ou différents dans un même substrat. La forme des dispositifs électrochimiques est dissociée de la forme des entités élémentaires car au moins une entité élémentaire est découpée afin de former un dispositif électrochimique ayant une forme recherchée. Cette spécificité permet de former dispositifs électrochimiques ayant des formes quelconques en partant d'un substrat ou de plusieurs substrats qui comporte le même pavage. La forme du pavage est dissociée de la forme du dispositif électrochimique.

## Revendications

1. Procédé de fabrication d'au moins des premier et deuxième dispositifs électrochimiques, tel que des systèmes électrochromes ou des systèmes pour le stockage de l'énergie, par exemple des microbatteries, des batteries ou des supercapacités, comprenant les étapes successives suivantes :
a) fournir un substrat (1) comportant un premier groupe d'entités élémentaires entières (8), chaque entité élémentaire entière (8) comprenant :
- un premier collecteur de courant (4), d'une première polarité,
- une première électrode (3),
- une couche mince ioniquement conductrice et électriquement isolante (7),
- une seconde électrode (5),
- un second collecteur de courant (6), d'une seconde polarité,
b) découper le substrat (1) de manière à former au moins des deuxième et troisième groupes d'entités élémentaires (8, 9) comportant chacun une pluralité d'entités élémentaires entières (8) à partir du premier groupe d'entités élémentaires entières (8), le découpage étant réalisé de manière à former une pluralité d'entités élémentaires non entières (9) dans chacun des deuxième et troisième groupes d'entités élémentaires (8, 9), tout ou partie des entités élémentaires (8, 9) disposées à la périphérie du deuxième groupe d'entités élémentaires (8, 9) et/ou du troisième groupe d'entités élémentaires (8 ,9) étant des entités élémentaires non entières (9),
c) connecter électriquement en parallèle les collecteurs de courant (4, 6) de même polarité des entités élémentaires entières (8) du deuxième groupe d'entités élémentaires sans connecter électriquement les entités élémentaires non entières (9) pour former le premier dispositif électrochimique,
d) connecter électriquement en parallèle les collecteurs de courant (4, 6) de même polarité des entités élémentaires entières (8) du troisième groupe d'entités élémentaires sans connecter électriquement les entités élémentaires non entières (9) pour former le deuxième dispositif électrochimique.

2. Procédé selon la revendication 1, **caractérisé en ce que**, lors de l'étape b), le substrat (1) est découpé sous la forme d'un carré, d'un rectangle, d'un triangle équilatéral ou d'un hexagone.

3. Procédé selon l'une quelconque des revendications 1 et 2, **caractérisé en ce que** la surface de l'espace entre les entités élémentaires entières (8) représente moins de 20% de la surface des entités élémentaires entières (8), de préférence moins de 10% de la surface des entités élémentaires entières (8), et encore plus préférentiellement, moins de 5% de la surface des entités élémentaires entières (8).

4. Procédé selon l'une quelconque des revendications précédentes, **caractérisé en ce que** la distance séparant deux entités élémentaires (8, 9) adjacentes est inférieure à la largeur du dispositif de découpe lors de l'étape de découpe du substrat.

5. Procédé selon l'une quelconque des revendications précédentes, **caractérisé en ce que**, après l'étape b), et avant les étapes c) et d), les entités élémentaires non entières (9) sont éliminées.

6. Procédé selon la revendication précédente, **caractérisé en ce que** les entités élémentaires non entières (9) sont éliminées par une étape de gravure, réalisée avantageusement par voie humide.

7. Procédé selon l'une quelconque des revendications précédentes, **caractérisé en ce que** les entités élémentaires (8, 9) sont régulièrement espacées les unes des autres.

8. Procédé selon l'une quelconque des revendications précédentes, **caractérisé en ce que** :
- le premier collecteur de courant (4) est formé sur une première face du substrat,
- la première électrode (3), la couche mince ioniquement conductrice et électriquement isolante (7), la seconde électrode (5), le second collecteur de courant (6), d'une seconde polarité, sont formés sur une seconde face du substrat (1),
et **en ce que** les collecteurs de courant (4, 6) disposés sur une même face du substrat (1) sont électriquement connectés par une couche électriquement conductrice (12).

9. Procédé selon l'une quelconque des revendications 1 à 7, **caractérisé en ce que** le premier collecteur de courant (4), la première électrode (3), la couche mince ioniquement conductrice et électriquement isolante (7), la seconde électrode (5), le second collecteur de courant (6), d'une seconde polarité, sont formés sur une même face du substrat (1).

10. Procédé selon la revendication précédente, **caractérisé en ce que** le premier collecteur de courant (4) est formé par dépôt d'un film électriquement conducteur continu sur la première face du substrat, le premier collecteur de courant (4) étant commun à toutes les entités élémentaires (8, 9).

11. Procédé selon la revendication précédente, **caractérisé en ce que** le procédé comporte une étape durant laquelle le premier collecteur (4) en périphérie de la zone de découpage est rendu accessible.

12. Procédé selon l'une des revendications 8 à 11, **caractérisé en ce que** les seconds collecteurs (6) de courant des entités élémentaires entières (8) sont électriquement connectés par une couche électriquement conductrice (12).

13. Procédé selon la revendication précédente, **caractérisé en ce que** le film électriquement conducteur est un film métallique ou un film électriquement isolant recouvert d'une couche électriquement conductrice.

14. Dispositif électrochimique, tel qu'un système électrochrome ou un système pour le stockage de l'énergie, par exemple une microbatterie, une batterie ou une supercapacité, comprenant :
- un substrat (1) muni d'une première et d'une seconde faces,
- une pluralité d'entités élémentaires entières (8), disposées sur le substrat (1), chaque entité élémentaire entières (8) comprenant :
- un premier collecteur de courant (4), d'une première polarité,
- une première électrode (3),
- une couche mince ioniquement conductrice et électriquement isolante (7),
- une seconde électrode (5),
- un second collecteur de courant (6), d'une seconde polarité,
les collecteurs de courant (4, 6) de même polarité des entités élémentaires entières (8) étant connectés électriquement en parallèle.
- au moins une entité élémentaire non entière (9), disposées sur le substrat (1), à la périphérie du substrat.

15. Dispositif selon la revendication 14, **caractérisé en ce que** la surface de l'espace entre les entités élémentaires entières (8) représente moins de 20% de la surface des entités élémentaires entières (8), de préférence moins de 10% de la surface des entités élémentaires entières (8), et encore plus préférentiellement, moins de 5% de la surface des entités élémentaires entières (8).

16. Dispositif selon l'une des revendications 14 et 15, **caractérisé en ce que** les entités élémentaires (8, 9) sont régulièrement espacées les unes des autres.

## Patentansprüche

1. Verfahren zur Herstellung von wenigstens einer ersten und einer zweiten elektrochemischen Vorrichtung, wie elektrochromen Systemen oder Systemen zur Speicherung von Energie, zum Beispiel Mikrobatterien, Batterien oder Superkondensatoren, umfassend die folgenden aufeinanderfolgenden Schritte:
a) Bereitstellen eines Substrats (1) mit einer ersten Gruppe von ganzen Elementareinheiten (8), wobei jede ganze Elementareinheit (8) umfasst:
- einen ersten Stromkollektor (4) mit einer ersten Polarität,
- eine erste Elektrode (3),
- eine ionisch leitende und elektrisch isolierende dünne Schicht (7),
- eine zweite Elektrode (5),
- einen zweiten Stromkollektor (6) mit einer zweiten Polarität,
b) Schneiden des Substrats (1), um wenigstens eine zweite und eine dritte Gruppe von Elementareinheiten (8, 9) mit jeweils einer Vielzahl von ganzen Elementareinheiten (8) aus der ersten Gruppe von ganzen Elementareinheiten (8) zu bilden, wobei das Schneiden durchgeführt wird, um eine Vielzahl von nicht ganzen Elementareinheiten (9) in jeder der zweiten und dritten Gruppe von Elementareinheiten (8, 9) zu bilden, wobei alle Elementareinheiten (8, 9) oder ein Teil davon, die am Umfang der zweiten Gruppe von Elementareinheiten (8, 9) und/oder der dritten Gruppe von Elementareinheiten (8, 9) angeordnet sind, nicht ganze Elementareinheiten (9) sind,
c) elektrisches Parallelschalten der Stromkollektoren (4, 6) mit gleicher Polarität der ganzen Elementareinheiten (8) der zweiten Gruppe von Elementareinheiten, ohne die nicht ganzen Elementareinheiten (9) elektrisch zu verbinden, um die erste elektrochemische Vorrichtung zu bilden,
d) elektrisches Parallelschalten der Stromkollektoren (4, 6) mit gleicher Polarität der ganzen Elementareinheiten (8) der dritten Gruppe von Elementareinheiten, ohne die nicht ganzen Elementareinheiten (9) elektrisch zu verbinden, um die zweite elektrochemische Vorrichtung zu bilden.

2. Verfahren nach Anspruch 1, **dadurch gekennzeichnet, dass** während des Schrittes b) das Substrat (1) in Form eines Quadrats, eines Rechtecks, eines gleichseitigen Dreiecks oder eines Sechsecks geschnitten wird.

3. Verfahren nach einem der Ansprüche 1 und 2, **dadurch gekennzeichnet, dass** die Fläche des Raums zwischen den ganzen Elementareinheiten (8) weniger als 20 % der Fläche der ganzen Elementareinheiten (8), vorzugsweise weniger als 10 % der Fläche der ganzen Elementareinheiten (8) und weiterhin bevorzugt weniger als 5 % der Fläche der ganzen Elementareinheiten (8) ausmacht.

4. Verfahren nach einem der vorhergehenden Ansprüche, **dadurch gekennzeichnet, dass** der Abstand, der zwei benachbarte Elementareinheiten (8, 9) trennt, kleiner ist als die Breite der Schneidevorrichtung während des Schrittes des Schneidens des Substrats.

5. Verfahren nach einem der vorhergehenden Ansprüche, **dadurch gekennzeichnet, dass** nach Schritt b) und vor den Schritten c) und d) die nicht ganzen Elementareinheiten (9) entfernt werden.

6. Verfahren nach dem vorhergehenden Anspruch, **dadurch gekennzeichnet, dass** die nicht ganzen Elementareinheiten (9) durch einen Ätzschritt, welcher vorteilhafterweise nass durchgeführt wird, entfernt werden.

7. Verfahren nach einem der vorhergehenden Ansprüche, **dadurch gekennzeichnet, dass** die Elementareinheiten (8, 9) gleichmäßig voneinander beabstandet sind.

8. Verfahren nach einem der vorhergehenden Ansprüche, **dadurch gekennzeichnet, dass**:
- der erste Stromkollektor (4) auf einer ersten Seite des Substrats ausgebildet ist,
- die erste Elektrode (3), die ionisch leitende und elektrisch isolierende dünne Schicht (7), die zweite Elektrode (5), der zweite Stromkollektor (6) mit einer zweiten Polarität auf einer zweiten Seite des Substrats (1) ausgebildet sind,
und dass die Stromkollektoren (4, 6), die auf einer gleichen Seite des Substrats (1) angeordnet sind, durch eine elektrisch leitende Schicht (12) elektrisch verbunden sind.

9. Verfahren nach einem der Ansprüche 1 bis 7, **dadurch gekennzeichnet, dass** der erste Stromkollektor (4), die erste Elektrode (3), die ionisch leitende und elektrisch isolierende dünne Schicht (7), die zweite Elektrode (5), der zweite Stromkollektor (6) mit einer zweiten Polarität auf einer gleichen Seite des Substrats (1) ausgebildet sind.

10. Verfahren nach dem vorhergehenden Anspruch, **dadurch gekennzeichnet, dass** der erste Stromkollektor (4) durch Abscheiden eines durchgehenden elektrisch leitenden Films auf der ersten Seite des Substrats gebildet ist, wobei der erste Stromkollektor (4) allen Elementareinheiten (8, 9) gemein ist.

11. Verfahren nach dem vorhergehenden Anspruch, **dadurch gekennzeichnet, dass** das Verfahren einen Schritt umfasst, während dessen der erste Kollektor (4) am Umfang des Schneidebereichs zugänglich gemacht wird.

12. Verfahren nach einem der Ansprüche 8 bis 11, **dadurch gekennzeichnet, dass** die zweiten Stromkollektoren (6) der ganzen Elementareinheiten (8) durch eine elektrisch leitende Schicht (12) elektrisch verbunden sind.

13. Verfahren nach dem vorhergehenden Anspruch, **dadurch gekennzeichnet, dass** der elektrisch leitende Film ein Metallfilm ist oder ein elektrisch isolierender Film, welcher mit einer elektrisch leitenden Schicht überzogen ist.

14. Elektrochemische Vorrichtung, wie ein elektrochromes System oder ein System zum Speichern von Energie, zum Beispiel eine Mikrobatterie, eine Batterie oder ein Superkondensator, umfassend:
- ein Substrat (1), das mit einer ersten und mit einer zweiten Seite versehen ist,
- eine Vielzahl von ganzen Elementareinheiten (8), die auf dem Substrat (1) angeordnet sind, wobei jede ganze Elementareinheit (8) umfasst:
- einen ersten Stromkollektor (4) mit einer ersten Polarität,
- eine erste Elektrode (3),
- eine ionisch leitende und elektrisch isolierende dünne Schicht (7),
- eine zweite Elektrode (5),
- einen zweiten Stromkollektor (6) mit einer zweiten Polarität,
wobei die Stromkollektoren (4, 6) mit gleicher Polarität der ganzen Elementareinheiten (8) elektrisch parallel geschaltet sind,
- wenigstens eine nicht ganze Elementareinheit (9), die auf dem Substrat (1) am Umfang des Substrats angeordnet ist.

15. Vorrichtung nach Anspruch 14, **dadurch gekennzeichnet, dass** die Fläche des Raums zwischen den ganzen Elementareinheiten (8) weniger als 20 % der Fläche der ganzen Elementareinheiten (8), vorzugsweise weniger als 10 % der Fläche der ganzen Elementareinheiten (8) und weiterhin bevorzugt weniger als 5 % der Fläche der ganzen Elementareinheiten (8) ausmacht.

16. Vorrichtung nach einem der Ansprüche 14 und 15, **dadurch gekennzeichnet, dass** die Elementareinheiten (8, 9) gleichmäßig voneinander beabstandet sind.

## Claims

1. Method for fabricating at least first and second electrochemical devices, such as electrochromic systems or energy storage systems, for example microbatteries, batteries or supercapacitors, comprising the following successive steps:
a) providing a substrate (1) comprising a first group of complete individual entities (8), each complete individual entity (8) comprising:
- a first current collector (4), of a first polarity,
- a first electrode (3),
- an ionically conductive and electrically insulating thin layer (7),
- a second electrode (5),
- a second current collector (6), of a second polarity,
b) cutting the substrate (1) so as to form at least second and third groups of individual entities (8, 9) each comprising a plurality of complete individual entities (8) from the first group of complete individual entities (8), cutting being performed so as to form a plurality of non-complete individual entities (9) in each of the second and third groups of individual entities (8, 9), all or part of the individual entities (8, 9) located at the periphery of the second group of individual entities (8, 9) and/or of the third group of individual entities (8, 9) being non-complete individual entities (9),
c) electrically connecting the current collectors (4, 6) of the same polarity of the complete individual entities (8) of the second group of individual entities in parallel without electrically connecting the non-complete individual entities (9) to form the first electrochemical device,
d) electrically connecting the current collectors (4, 6) of the same polarity of the complete individual entities (8) of the third group of individual entities in parallel without electrically connecting the non-complete individual entities (9) to form the second electrochemical device.

2. Method according to claim 1, **characterized in that**, in step b), the substrate (1) is cut in the shape of a square, a rectangle, an equilateral triangle or a hexagon.

3. Method according to any one of claims 1 and 2, **characterized in that** the surface of the space between the complete individual entities (8) represents less than 20% of the surface of the complete individual entities (8), preferably less than 10% of the surface of the complete individual entities (8), and even more preferentially less than 5% of the surface of the complete individual entities (8).

4. Method according to any one of the foregoing claims, **characterized in that** the distance separating two adjacent individual entities (8, 9) is smaller than the width of the cutting device during the cutting step of the substrate.

5. Method according to any one of the foregoing claims, **characterized in that**, after step b), and before steps c) and d), the non-complete individual entities (9) are eliminated.

6. Method according to the foregoing claim, **characterized in that** the non-complete individual entities (9) are eliminated by an etching step advantageously performed by a wet etching method.

7. Method according to any one of the foregoing claims, **characterized in that** the individual entities (8, 9) are regularly spaced apart from one another.

8. Method according to any one of the foregoing claims, **characterized in that**:
- the first current collector (4) is formed on a first surface of the substrate,
- the first electrode (3), the ionically conductive and electrically insulating thin layer (7), the second electrode (5), and the second current collector (6), of a second polarity, are formed on a second surface of the substrate (1),
and **in that** the current collectors (4, 6) located on the same surface of the substrate (1) are electrically connected by an electrically conductive layer (12).

9. Method according to any one of claims 1 to 7, **characterized in that** the first current collector (4), the first electrode (3), the ionically conductive and electrically insulating thin layer (7), the second electrode (5), and the second current collector (6), of a second polarity, are formed on the same surface of the substrate (1).

10. Method according to the foregoing claim, **characterized in that** the first current collector (4) is formed by deposition of a continuous electrically conductive film on the first surface of the substrate, the first current collector (4) being common to all the individual entities (8, 9).

11. Method according to the foregoing claim, **characterized in that** the method comprises a step during which the first current collector (4) at the periphery of the cutting area is made accessible.

12. Method according to one of claims 8 to 11, **characterized in that** the second current collectors (6) of the complete individual entities (8) are electrically connected by an electrically conductive layer (12).

13. Method according to the foregoing claim, **characterized in that** the electrically conductive film is a metallic film or an electrically insulating film covered by an electrically conductive layer.

14. Electrochemical device, such as an electrochromic system or an energy storage system, for example a microbattery, a battery or a supercapacitor, comprising:
- a substrate (1) provided with first and second surfaces,
- a plurality of complete individual entities (8), arranged on the substrate (1), each complete individual entity (8) comprising:
- a first current collector (4), of a first polarity,
- a first electrode (3),
- an ionically conductive and electrically insulating thin layer (7),
- a second electrode (5),
- a second current collector (6), of a second polarity,
the current collectors (4, 6) of the same polarity of the complete individual entities (8) being electrically connected in parallel.
- at least one non-complete individual entity (9), located on the substrate (1), at the periphery of the substrate.

15. Device according to claim 14, **characterized in that** the surface of the space between the complete individual entities (8) represents less than 20% of the surface of the complete individual entities (8), preferably less than 10% of the surface of the complete individual entities (8), and even more preferentially less than 5% of the surface of the complete individual entities (8).

16. Device according to one of claims 14 and 15, **characterized in that** the individual entities (8, 9) are regularly spaced apart from one another.
